# FASCICULE DE BREVET EUROPEEN

(11) **EP 0 720 281 B1**
(45) Date de publication et mention de la délivrance du brevet: **17.06.1998**
(21) Numéro de dépôt: 95402962.5
(22) Date de dépôt: 28.12.1995
(51) Int. Cl.: H02M 7/48

(54) **Dispositif électronique de conversion de l'énergie électrique**
Elektronische Vorrichtung zur elektrischen Energieumwandlung
Electronic device for electric energy conversion

(30) Priorité: 29.12.1994 FR 9415865
(43) Date de publication de la demande: 03.07.1996
(73) Titulaire: GEC ALSTHOM TRANSPORT SA, 75116 Paris (FR)
(72) Inventeur: Lavieville, Jean-Paul, F-91190 Gif sur Yvette (FR); Bethoux, Olivier, F-91180 St. Germain les Arpajon (FR); Carrere, Philippe, F-91460 Marcoussis (FR); Meynard, Thierry, F-31500 Toulouse (FR)
(74) Mandataire: Fournier, Michel

(56) Documents cités:
- FR-A- 2 679 715
- US-A- 5 227 962

## Description

La présente invention concerne les dispositifs électroniques de conversion de l'énergie électrique du type décrit dans la demande de brevet FR - 2 679 715 A1.

Le convertisseur décrit dans cette demande de brevet est illustré, à titre d'exemple, par la figure 1 ci-annexée. Il comprend essentiellement, entre une source de tension SE et une source de courant C, une pluralité de cellules de commutation commandables CL1, CL2..., CLn, chacune ayant deux interrupteurs T1, T'1; T2, T'2...; Tn, T'n, avec un pôle de chacun des deux interrupteurs constituant une paire de pôles amont et l'autre pôle de chacun des interrupteurs constituant une paire de pôles aval, la paire de pôles aval d'une cellule amont étant connectée à la paire de pôles amont d'une cellule aval et la paire de pôles amont d'une première cellule CL1 étant connectée à ladite source de courant C, tandis que la paire de pôles aval d'une dernière cellule CLn est connectée à ladite source de tension SE, ce convertisseur comprenant encore un condensateur C1, C2..., Cn, pour chaque cellule, sauf que celui de la dernière peut être omis quand ladite source de tension SE est apte à en jouer le rôle, connecté entre les deux pôles de la paire de pôles aval de la cellule, ainsi que des moyens de commande (non représentés) régissant le fonctionnement nominal du convertisseur en agissant sur les interrupteurs des cellules successives de sorte que les deux interrupteurs d'une même cellule soient toujours respectivement dans des états de conduction opposés (ce qui est illustré par des liaisons de commande telles que lc1), de sorte que, en réponse à un signal de commande de cellule fourni par lesdits moyens de commande, l'un des deux interrupteurs d'une même cellule soit successivement dans un premier état de conduction, puis dans un second état de conduction durant une période de convertisseur cycliquement répétée, et de sorte que, en réponse à des signaux de commande de cellules identiques mais décalés dans de temps d'une fraction de ladite période de convertisseur, les interrupteurs des cellules successives aient respectivement le même fonctionnement, mais décalé dans le temps de ladite fraction de période.

De préférence, ladite fraction de période est égale à l'inverse du nombre n de cellules, soit 2π/n, ce qui est optimal en ce qui concerne les harmoniques engendrées sur la sortie et permet un équilibrage naturel des tensions de charge des condensateurs du convertisseur. Un autre décalage est cependant concevable.

Dans un tel convertisseur, les condensateurs successifs C1, C2..., Cn ont des tensions de charge moyennes respectivement croissantes, la tension de charge moyenne du condensateur associé à chacune desdites cellules étant égale au produit d'une tension VE issue de ladite source de tension SE, de l'inverse du nombre de cellules du convertisseur et du rang de la cellule, soit VE/3, 2VE/3, VE, lorsque n = 3, c'est-à-dire lorsque le convertisseur a trois cellules seulement.

Dans ce qui suit on dénommera convertisseur multiniveaux un convertisseur répondant à la description qui précède.

L'objet de la présente invention est de faire en sorte que, dans un tel convertisseur multiniveaux, la charge de chaque condensateur reste conforme à ce qui vient d'être indiqué, malgré les inévitables déviations par rapport aux conditions nominales de fonctionnement.

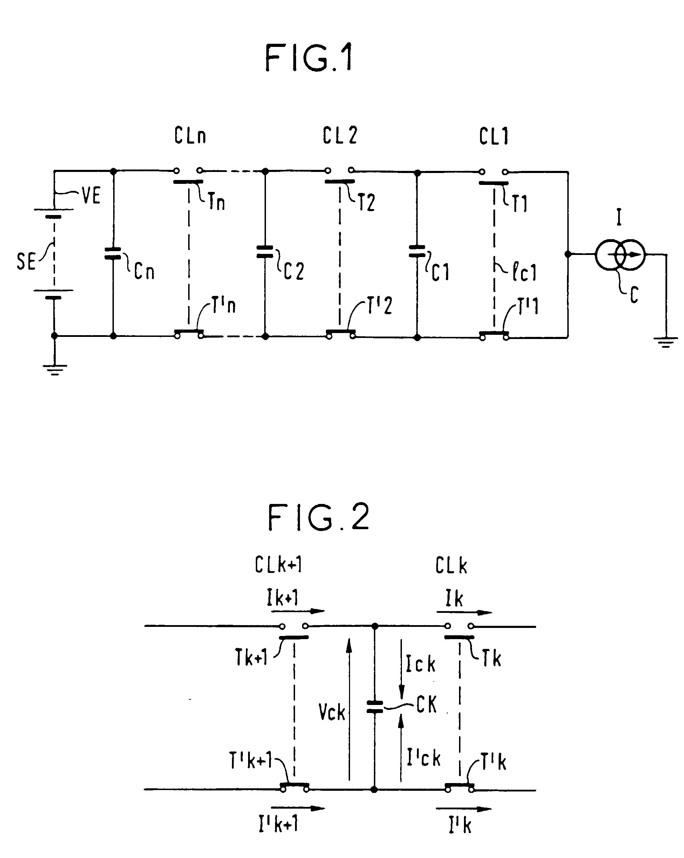

Pour examiner plus facilement comment doit nominalement évoluer la charge d'un des condensateurs d'un convertisseur multiniveaux conforme à ce qui précède, on se référera à la figure 2 qui représente une cellule de commutation quelconque CLk, avec ses interrupteurs Tk, T'k, le condensateur Ck associé à cette cellule, ainsi que la cellule suivante CLk+1, avec ses interrupteurs Tk+1, T'k+1.

Compte tenu du couplage entre les interrupteurs de chaque cellule, Tk, T'k ; Tk+1, T'k+1, l'ensemble de deux cellules imbriquées Tk-Tk+1 représenté à la figure 2 possède quatre états :
a) un premier état où, Tk et Tk+1 étant bloqués, la tension de charge de Ck n'évolue pas ;
b) un deuxième état où, Tk et Tk+1 étant conducteurs, la tension de charge de Ck n'évolue pas non plus, parce qu'alors T'k et T'k+1 sont bloqués ;
c) un troisième état où, Tk étant conducteur et Tk+1 bloqué, la source de courant C impose un courant Ik égal à I à travers Tk, alors que le courant I'k vers T'k est nul. L'état de Tk+1 impose un courant Ik+1 nul, alors que le courant I'k+1 est égal à I, tandis que le courant I'ck dans le condensateur Ck est égal à I ;
d) un quatrième état où, Tk étant bloqué et Tk+1 conducteur, la source de courant C impose un courant I'k+1 égal à I à travers T'k, alors que le courant Ik à travers Tk est nul. L'état de Tk+1 impose un courant Ik+1 égal à I, alors que le courant I'k+1 est nul, tandis que le courant Ick dans le condensateur Ck est égal à I.

Les courants I'ck = I'k+1 et Ick = Ik+1 apportent au condensateur Ck des charges additionnelles opposées, dans les troisième et quatrième états ci-dessus ; on dira que les premières sont négatives et les secondes positives. Les courants correspondant à ces deux états sont imposés par la source de courant. Si la source de courant est rigoureusement continue, toutes choses égales par ailleurs, les courants imposés par la source de courant dans les phases c) et d) sont les mêmes et de sens opposés, à tout instant, au long des intervalles de conduction de Tk et Tk+1 (nominalement égaux et décalés dans le temps, comme indiqué plus haut). Cela entraîne que la charge de Ck, modifiée négativement puis positivement de quantités égales, ne varie pas au cours d'une période de convertisseur.

Les courants Ick et I'ck sont déterminés par la tension de la source de tension, le courant dans la source de courant et la tension de charge Vck du condensateur Ck. De manière plus générale, lorsque l'impédance de la source de courant n'est pas infinie, le courant de la source de courant dépend de la tension à ses bornes et donc des tensions Vck des condensateurs. S'il advient que la tension de charge Vck soit, par exemple, trop élevée, par rapport à sa valeur nominale VE.k/n, quelle qu'en soit la raison, il en résultera un courant de décharge I'ck tendant à être plus fort et un courant de charge Ick tendant à être plus faible que ce qu'ils seraient nominalement, ce qui tendra à ramener la charge du condensateur Ck à ce qu'elle devrait être. Ceci explique que le fonctionnement du convertisseur multiniveaux soit stable et permette des variations d'amplitude, dans les deux sens, tant du côté de la source de tension que du côté de la source de courant. On verra par la suite que cela soulève néanmoins des problèmes en termes de dynamique.

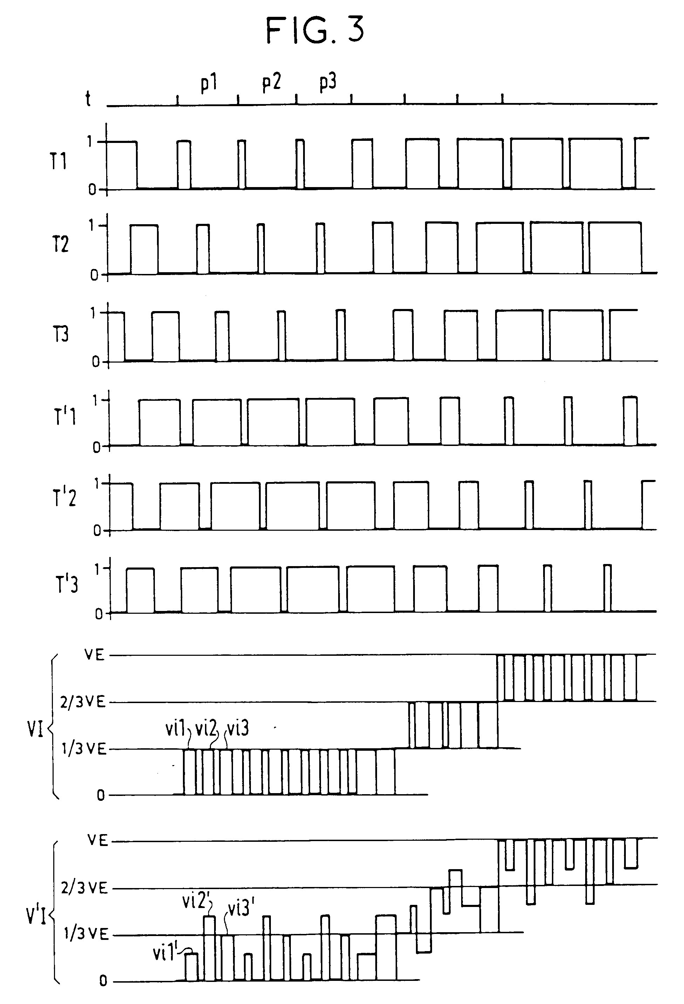

La figure 3 donne un exemple de fonctionnement du convertisseur multiniveaux conforme aux figures 1 et 2, dans le cas où n = 3 ; on y applique une commande du type de la modulation PWM, en vue de la fourniture à la source de courant C d'une tension alternative modulée sinusoïdalement, c'est-à-dire que, durant des périodes successives p1, p2, p3... de fonctionnement du convertisseur (ligne t), les interrupteurs T1, T2, T3 sont successivement conducteurs pendant des intervalles de durée variant selon une onde de modulation de la tension de sortie, dite ci-après modulante. Les interrupteurs correspondants T'1, T'2, T'3 sont à chaque instant dans la position opposée.

Bien entendu d'autres modes de modulation du fonctionnement des interrupteurs permettent, comme il est bien connu, d'obtenir le même résultat. Bien entendu encore, le convertisseur peut tout aussi bien servir à fournir à la source de courant C toute autre forme d'onde ou une tension continue régulée.

On considérera d'abord une période p1 de fonctionnement du convertisseur. Au cours de celle-ci, lorsque l'un des interrupteurs T1, T2, T3 est conducteur, les deux autres sont bloqués ; pour chaque ensemble de deux cellules et le condensateur compris entre elles, cela correspond aux états c) et d) décrits plus haut, dans lesquels le condensateur reçoit successivement des charges additionnelles négatives et des charges additionnelles positives, dont la valeur totale est nominalement nulle. On remarquera de plus que, lorsque les cellules imbriquées CL1-CL2 sont dans l'état d), les cellules imbriquées CL2-CL3 sont dans l'état c), de sorte que le condensateur C1 reçoit des charges additionnelles positives par le même courant qui fournit des charges additionnelles négatives au condensateur C2.

La figure 3 illustre additionnellement et à titre d'exemple le fonctionnement du convertisseur multiniveaux dans des périodes p2, p3, etc..., au cours desquelles les durées de conduction des interrupteurs T1, T2, T3 se raccourcissent, puis s'allongent jusqu'à dépasser 1/3 de période, se recouvrant alors. La ligne VI représente ce que serait idéalement la tension transmise à la source de courant, notamment si les condensateurs avaient une capacité telle que les charges additionnelles considérées ne modifiaient sensiblement pas la tension à leurs bornes. La tension VI est exprimée en fractions de la tension VE de la source de tension SE, en prenant comme référence de tension le pôle négatif de la source de tension SE. On voit que cette tension VI contient, d'une part, un fondamental important à la une fréquence Fd, pour fréquence de découpage, qui est ladite fréquence de convertisseur et, d'autre part, des harmoniques d'amplitudes plus faibles à des fréquences supérieures à la fréquence de découpage, qui peuvent être facilement éliminées par un filtre passe-bas.

Le courant étant variable, les états c) et d) envisagés plus haut n'apporteront pas des charges additionnelles égales aux condensateurs du convertisseur, puisqu'entre ces deux états, le courant aura eu le temps de varier. Cette variation ne sera négligeable que si la période de fonctionnement des interrupteurs est nettement supérieure à la fréquence de la modulante.

Par ailleurs, il faut s'attendre à ce que le courant alternatif fourni à la source de courant ne soit pas strictement sinusoïdal, mais distordu de façon asymétrique. De même, des écarts de niveaux dans les signaux de commande ou dans les signaux les engendrant, ou encore les différences de temps de commutation entre les divers interrupteurs traversés, rendront inévitablement inégales les durées de conduction des interrupteurs sur une période de fonctionnement du convertisseur, ou décaleront dans le temps les phases de conduction des interrupteurs, ou encore déséquilibreront les courants de charge et de décharge des condensateurs. D'une manière générale, par conséquent, on ne peut garantir en pratique, dans un convertisseur multiniveaux du type décrit, le respect des conditions nominales de fonctionnement, telles qu'elles ont été initialement décrites. Or, un écart de charge additionnelle persistant conduit à un écart dans un sens ou dans l'autre de la charge d'un condensateur, donc de sa tension de charge moyenne, donc aussi à une distorsion, à la fréquence de fonctionnement du convertisseur, de la tension fournie à la source de courant.

Cet effet est illustré par le tracé VI' de la figure 3, qui est semblable au tracé VI, à cela près que, le condensateur C1 (figure 1) étant supposé chargé sous une tension plus faible que sa tension de charge nominale, au lieu de fournir des impulsions vi1, vi2, vi3 d'amplitude constante, le convertisseur fournit des impulsions telles que vi1' d'amplitude réduite (l'échelle est exagérée pour une meilleure lisibilité), lorsque le condensateur C1 fournit à la source de courant C sa propre tension de charge, et des impulsions telles que vi2' d'amplitude accrue, lorsque le condensateur C1 soustrait sa propre de tension de celle qui est fournie à la source de courant C, ainsi que des impulsions telles que vi3' d'amplitude inchangée, lorsque le condensateur C1 est hors circuit. On voit aisément que, dans le signal VI', cela apporte une composante perturbatrice à ladite fréquence de découpage.

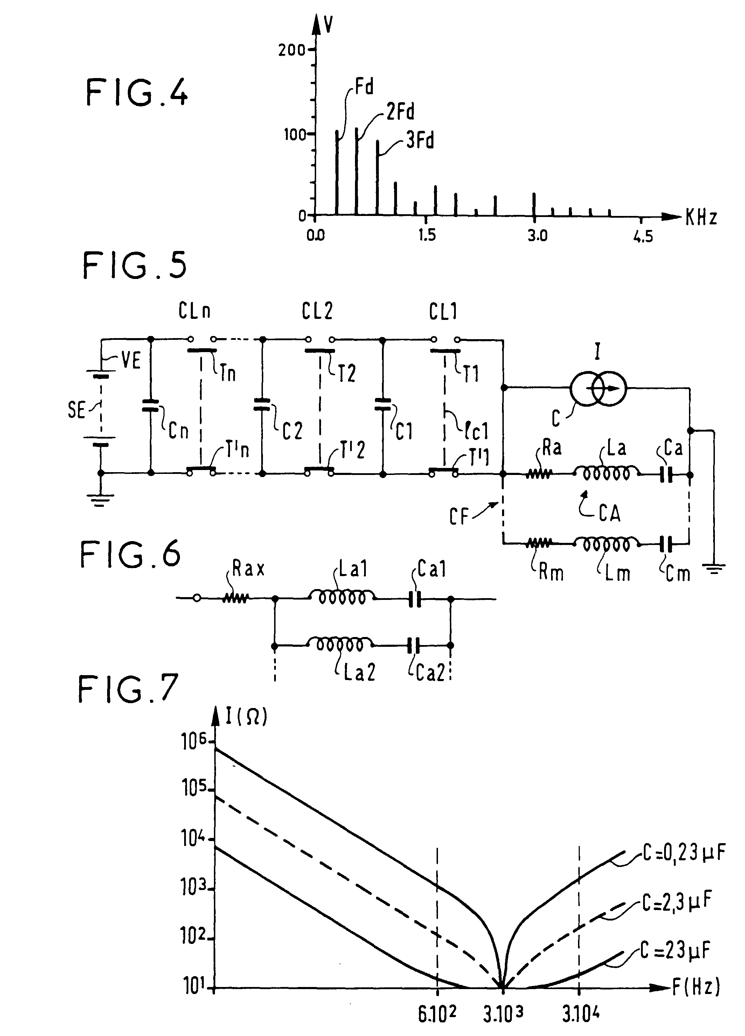

La figure 4 représente un exemple de spectre d'une telle composante perturbatrice, dans un convertisseur à 7 étages, où l'on voit une raie à une fréquence de découpage Fd, qui est la fréquence de convertisseur, puis des raies à des fréquences 2Fd, 3Fd, etc.

De telles raies n'existent pas quand les condensateurs sont chargés à leurs tensions nominales respectives. Lorsqu'elles apparaissent, elle sont généralement nuisible.

Mais, surtout, les tensions auxquelles sont soumis les interrupteurs ne seront alors plus sensiblement égales à la différence des tensions de charge nominales de deux condensateurs adjacents, c'est-à-dire à la valeur de la tension de la source de tension divisée par le nombre d'étages du convertisseur. Cela peut mettre en danger ces interrupteurs.

Bien entendu, comme mentionné précédemment, les écarts de charge des condensateurs tendent spontanément à se résorber, mais ce processus prend du temps.

Par ailleurs, ce processus spontané est mis en oeuvre via la source de courant. Il ne peut donc opérer lorsque la source de courant n'impose pas de courant et, en tout cas, sera ralenti lorsque le courant de la source de courant est réduit.

La présente invention, à partir de ces constatations, propose un convertisseur multiniveaux dans lequel est mieux assuré le maintien de la charge moyenne de chacun des condensateurs du convertisseur à sa valeur nominale.

Selon l'invention, ce résultat est atteint en ce que le convertisseur multiniveaux comprend additionnellement, en parallèle sur ladite source de courant, un circuit de filtrage, pour dissiper préférentiellement, au moins en partie, l'énergie de toute composante ayant une fréquence comprise dans une bande de fréquence allant de la fréquence du fondamental de la tension appliquée à la source de courant à une fréquence égale à n fois ladite fréquence de convertisseur, dite aussi fréquence de découpage, n étant le nombre d'étages du convertisseur, ces deux fréquences n'étant pas comprises dans ladite bande de fréquence.

Dans une forme de réalisation, ce circuit de filtrage comprend au moins un circuit série de type RLC. On peut aussi prévoir plusieurs circuits série LC en série avec une résistance commune. Mais il peut aussi être prévu plusieurs circuits série RLC en parallèle.

Avantageusement, pour chaque circuit série RLC considéré, la résistance a une valeur assez faible pour dissiper le plus rapidement possible ladite énergie, mais assez élevée pour éviter qu'un courant excessif ne détériore les interrupteurs du convertisseur.

Les différents objets et caractéristiques de la présente invention apparaîtront plus clairement dans la description qui va suivre de modes de mise oeuvre de l'invention, donnée à titre d'exemple non limitatif, en se reportant aux figures annexées qui représentent :
- la figure 1, déjà décrite, le schéma de principe d'un convertisseur multiniveaux connu
- la figure 2, déjà décrite, le schéma de principe d'un ensemble de deux étages imbriqués du convertisseur multiniveaux de la figure 1,
- la figure 3, déjà décrite, des formes d'ondes décrivant le fonctionnement du convertisseur multiniveaux des figures 1 et 2, dans le cas où il comprend trois étages,
- la figure 4, un exemple de spectre de tension de sortie du convertisseur de la figure 1 en cas de déséquilibre de charge de condensateur, dans le cas d'un convertisseur à 7 étages,
- la figure 5, le schéma de principe d'un convertisseur multiniveaux du type des figures 1, 2 et 3, modifié conformément à un premier exemple de mise en oeuvre de la présente invention,
- la figure 6, le schéma partiel d'une variante du convertisseur de la figure 5,
- la figure 7, des courbes illustrant la réponse impédance (I) / fréquence (F) de divers circuits RLC accordés à la même fréquence, mais avec diverses valeurs de capacité et d'inductance.

On ne reviendra pas sur la description d'un convertisseur multiniveaux. Les schémas des figures 1, 2, 3 correspondent à un convertisseur du type décrit dans le document de brevet FR - 2 697 715 A1 auquel le lecteur est renvoyé pour de plus amples détails. La figure 4 donne un exemple de composantes perturbatrices contre laquelle l'invention propose une solution.

La figure 5 représente le convertisseur de la figure 1, dans lequel les différents éléments conservent leurs références. A ce convertisseur est ajouté, à sa sortie, c'est-à-dire en parallèle sur la source de courant, un circuit de filtrage CF, pour dissiper préférentiellement, au moins en partie, l'énergie de toute composante ayant une fréquence comprise dans une bande de fréquence allant de la fréquence du fondamental de la tension appliquée à la source de courant à une fréquence égale à n fois ladite fréquence de convertisseur, dite aussi fréquence de découpage, n étant le nombre d'étages du convertisseur, ces deux fréquences n'étant pas comprises dans ladite bande de fréquence.

Plus précisément, ce circuit de filtrage comprend un ou plusieurs circuits série de type RLC, chacun d'eux comprenant une résistance Ra, Rm, une inductance La, Lm, et une capacité Ca, cm.

Selon une variante, qui est illustrée par la figure 6, il est prévu une résistance Rax commune en série avec plusieurs circuits résonnants série La1, Ca1, La2, Ca2. Cette variante, par rapport à la solution de la figure 5, est plus économique mais plus délicate à mettre en pratique.

Idéalement, le circuit de filtrage CF devrait avoir une impédance infinie jusqu'à la fréquence fondamentale de la tension fournie à la source de courant par le convertisseur, une impédance nulle au-delà de la fréquence fondamentale de la tension fournie à la source de courant par le convertisseur jusque, mais non comprise, à la fréquence nFd qui correspond à la fréquence de fonctionnement des interrupteurs multipliée par le nombre de cellules du convertisseur (voir les impulsions vi1, vi2, vi3 de la figure 3), et une impédance infinie au-delà.

Une impédance nulle n'est pas souhaitable, pour éviter que les interrupteurs du convertisseur n'aient à supporter un courant excessif. La valeur minimale des résistances Ra, Rm, Rax est définie sur cette base : elle peut être de l'ordre d'un ohm dans certaines applications.

Une impédance infinie dans un intervalle et faible dans d'autres intervalles n'est pas possible. L'invention prévoit donc au moins un circuit résonnant série. La réponse en fréquence d'un tel circuit est illustrée à la figure 7 qui représente les courbes impédance (I) / fréquence (F) de trois circuits RLC ayant une résistance R de 10 ohms, des capacités C de 23 µF, 2,3 µF et 0,23 µF. La valeur de l'inductance est telle que la résonance est obtenue à chaque fois à la fréquence de 3 kHz.

On voit qu'à 600 Hz, l'impédance du circuit est d'environ 10, 10², 10³ ohms. L'échelonnement des valeurs est semblable à 30 kHz. La courbe, pour une faible valeur de capacité (0,23 µF) et une inductance élevée correspondante, a une forme en V prononcée. L'avantage d'une capacité faible est que l'impédance est élevée en dehors de la bande de fréquence contenant le spectre des composantes perturbatrices éventuelles. L'inconvénient est que, dans cette bande, l'impédance n'est faible que pour la fondamentale de ces composantes. Une solution, selon l'invention, illustrée par la figure 5, est de prévoir plusieurs circuits RLC en parallèle, par exemple un pour chacune des raies de grande amplitude de la figure 4, les autres raies étant négligées. Mais cette solution implique la multiplication de circuits RLC coûteux, volumineux et dissipatifs. La solution de la figure 6 est en fait similaire.

Mais, dans certaines applications (tension relativement faible, puissance dissipée pouvant être proportionnellement plus élevée, composantes perturbatrices d'amplitude limitée), l'invention prévoit donc aussi de choisir une valeur de capacité C plus élevée, ouvrant la caractéristique en V et permettant de réduire le nombre de circuits RLC, voire, à la limite, de n'en prévoir plus qu'un seul.

Il est bien évident que les descriptions qui précède n'ont été données qu'à titre d'exemple limitatif et que les valeurs numériques, notamment, peuvent changer avec chaque application.

## Revendications

1. Convertisseur multiniveaux comprenant notamment, entre une source de tension (SE) et une source de courant (C), une succession de cellules de commutation commandables (CL1, CL2..., CLn), chacune ayant deux interrupteurs (T1, T'1; T2, T'2...; Tn, T'n), avec un pôle de chacun des deux interrupteurs constituant une paire de pôles amont et l'autre pôle de chacun des interrupteurs constituant une paire de pôles aval, la paire de pôles aval d'une cellule amont étant connectée à la paire de pôles amont d'une cellule aval et la paire de pôles amont d'une première cellule (CL1) étant connectée à ladite source de courant (C), tandis que la paire de pôles aval d'une dernière cellule (CLn) est connectée à ladite source de tension (SE), ce convertisseur comprenant encore un condensateur (C1, C2..., Cn), pour chaque cellule, sauf que celui de la dernière peut être omis quand ladite source de tension (SE) est apte à en jouer le rôle, connecté entre les deux pôles de la paire de pôles aval de la cellule, ainsi que des moyens de commande régissant le fonctionnement nominal du convertisseur en agissant sur les interrupteurs des cellules successives de sorte que les deux interrupteurs d'une même cellule soient toujours respectivement dans des états de conduction opposés, de sorte que, en réponse à un signal de commande de cellule (CT1, CT2..., CTn) fourni par lesdits moyens de commande, l'un des deux interrupteurs d'une même cellule soit successivement dans un premier état de conduction, puis dans un second état de conduction durant une période cycliquement répétée, et de sorte que, en réponse à des signaux de commande de cellules identiques mais décalés dans de temps d'une fraction de ladite période, les interrupteurs des cellules successives aient respectivement le même fonctionnement, mais décalé dans le temps de ladite fraction de période, les condensateurs successifs (C1, C2..., Cn) ayant nominalement des tensions de charge moyennes respectivement croissantes, la tension de charge moyenne nominale du condensateur de chacune desdites cellules étant égale au produit d'une tension (VE) issue de ladite source de tension (SE), par l'inverse du nombre de cellules et par le rang de la cellule, caractérisé en ce qu'il comprend additionnellement, en parallèle sur ladite source de courant (C), un circuit de filtrage (CF), pour dissiper préférentiellement, au moins en partie, l'énergie de toute composante ayant une fréquence comprise dans une bande de fréquence allant de la fréquence du fondamental de la tension appliquée à la source de courant à une fréquence égale à n fois ladite fréquence de convertisseur, dite aussi fréquence de découpage, n étant le nombre d'étages du convertisseur, ces deux fréquences n'étant pas comprises dans ladite bande de fréquence.

2. Convertisseur multiniveaux conforme à la revendication 1, caractérisé en ce que ledit circuit de filtrage (CF) comprend au moins un circuit série de type RLC, comprenant une résistance (Ra) et un circuit résonnant série (La, Ca).

3. Convertisseur multiniveaux conforme à la revendication 2, caractérisé en ce que ledit circuit de filtrage (CF) comprend une résistance commune Rax en série avec plusieurs circuits résonnants série (La1, Ca1 ; La2, Ca2).

4. Convertisseur multiniveaux conforme à la revendication 2 ou 3, caractérisé en ce que ledit circuit de filtrage (CF) comprend un circuit résonnant série pour ladite fréquence de convertisseur (Fd) et pour certaines au moins de ses harmoniques, d'amplitudes relatives les plus élevées.

5. Convertisseur multiniveaux conforme à la revendication 2 ou 3, caractérisé en ce que, pour tout circuit série RLC considéré, la résistance a une valeur assez faible pour dissiper le plus rapidement possible une énergie fournie par le convertisseur ayant une fréquence correspondant à la fréquence de résonance de tout circuit résonnant connecté en série avec cette résistance, mais en même temps assez élevée pour éviter qu'un courant excessif ne détériore les interrupteurs du convertisseur.

## Patentansprüche

1. Multiniveau-Umwandler, der insbesondere zwischen einer Spannungsquelle (SE) und einer Stromquelle (C) eine Folge von steuerbaren Schaltzellen (CL1, CL2 ..., CLn) umfaßt, deren jede zwei Unterbrecher (T1, T'1; T2, T'2 ...; Tn, T'n) hat, wobei ein Pol jedes der zwei Unterbrecher ein Paar von aufwärtsseitigen Polen und der andere Pol jedes der Unterbrecher ein Paar von abwärtsseitigen Polen bildet, wobei das Paar von abwärtsseitigen Polen einer aufwärtsseitigen Zelle mit dem Paar von aufwärtsseitigen Polen einer abwärtsseitigen Zelle und das Paar von aufwärtsseitigen Polen einer ersten Zelle (CL1) mit der Stromquelle (C) verbunden ist, wohingegen das Paar von abwärtsseitigen Polen einer letzten Zelle (CLn) mit der Spannungsquelle (SE) verbunden ist, wobei dieser Umwandler ferner noch einen Kondensator (C1, C2 ..., Cn) für jede Zelle ausgenommen denjenigen der letzten, der fortgelassen werden kann, wenn die Spannungsquelle (SE) geeignet ist, dessen Rolle zu spielen, der zwischen den zwei Polen des Paares von aufwärtsseitigen Polen der Zelle angeschlossen ist, sowie Steuermittel umfaßt, die die nominelle Funktion des Umwandlers lenken durch Einwirken auf die Unterbrecher der aufeinanderfolgenden Zellen derart, daß die zwei Unterbrecher einer gleichen Zelle immer in jeweils entgegengesetzten Leitfähigkeiszuständen sind, so daß in Reaktion auf ein von den Steuermitteln geliefertes Zellensteuersignal (CT1, CT2 ..., CTn) der eine der zwei Unterbrecher einer gleichen Zelle nacheinander in einem ersten Leitfähigkeitszustand und dann in einem zweiten Leitfähigkeitszustand während einer zyklisch wiederholten Periode ist, und so daß in Reaktion auf identische, aber um einen Bruchteil der Periode zeitlich versetzte Zellensteuersignale die Unterbrecher der aUfeinanderfolgenden Zellen jeweils die gleiche, allerdings um den Periodenbruchteil zeitversetzte Funktion haben, wobei die aufeinanderfolgenden Kondensatoren (C1, C2 ..., Cn) nominell jeweils zunehmende mittlere Ladespannungen haben, wobei die nominelle mittlere Ladespannung des Kondensators jeder der Zellen gleich dem Produkt einer von der Spannungsquelle (SE) ausgegebenen Spannung (VE) mit dem Kehrwert der Zahl der Zellen und mit dem Rang der Zelle ist,
dadurch gekennzeichnet, daß er zusätzlich parallel zur Stromquelle (C) eine Filterschaltung (CF) umfaßt, um vorzugsweise, wenigstens zum Teil, die Energie jeder Komponente zu dissipieren, die eine Frequenz hat, die in einem Frequenzband enthalten ist, das von der Frequenz der Grundschwingung der an die Stromquelle angelegten Spannung bis zu einer Frequenz gleich dem n-fachen der Umwandlerfrequenz, auch als Pendelfrequenz bezeichnet, reicht, wobei n die Zahl von Stufen des Umwandlers ist und diese zwei Frequenzen nicht in dem Frequenzband enthalten sind.

2. Multiniveau-Umwandler nach Anspruch 1, dadurch gekennzeichnet, daß die Filterschaltung (CF) wenigstens eine RLC-Reihenschaltung umfaßt, die einen Widerstand (Ra) und eine Reihen-Resonatorschaltung (La, Ca) umfaßt.

3. Multiniveau-Umwandler nach Anspruch 2, dadurch gekennzeichnet, daß die Filterschaltung (CF) einen gemeinsamen Widerstand Rax in Reihe mit mehreren Reihen-Resonatorschaltungen (La1, Ca1; La2, Ca2) umfaßt.

4. Multiniveau-Umwandler nach Anspruch 2 oder 3, dadurch gekennzeichnet, daß die Filterschaltung (CF) eine Reihen-Resonatorschaltung für die Umwandlerfrequenz (Fd) und für wenigstens gewisse ihrer Oberschwingungen mit den relativ höchsten Amplituden umfaßt.

5. Multiniveau-Umwandler nach Anspruch 2 oder 3, dadurch gekennzeichnet, daß für jede betrachtete RLC-Reihenschaltung der Widerstand einen Wert hat, der klein genug ist, um eine vom Umwandler gelieferte Energie mit einer Frequenz, die der Resonanzfrequenz jeder in Reihe mit diesem Widerstand geschalteten Resonatorschaltung entspricht, schnell genug zu dissipieren, der aber gleichzeitig hoch genug ist, um zu verhindern, daß ein übermäßiger Strom die Unterbrecher des Umwandlers beschädigt.

## Claims

1. A multilevel converter comprising, in particular, between a voltage source (SE) and a current source (C), a succession of controllable switching cells (CL1, CL2, ..., CLn), each having two switches (T1, T'1; T2, T'2; ...; Tn, T'n), with one pole of each of the two switches forming part of a pair of upstream poles and with the other pole of each of the switches forming one of a pair of downstream poles, the pair of downstream poles of an upstream cell being connected to the pair of upstream poles of a downstream cell, and the pair of upstream poles of a first cell (CL1) being connected to said current source (C) while the pair of downstream poles of a last cell (CLn) is connected to said voltage source (SE), the converter further comprising a capacitor (C1, C2, ..., Cn) for each cell, except that the capacitor of the last cell may be omitted when said voltage source (SE) is suitable for performing the same role, each capacitor being connected between the two poles constituting the pair of downstream poles of the corresponding cell, the converter also comprising control means governing the nominal operation of the converter by acting on the switches of successive cells in such a manner that the two switches of any given cell are always in respective opposite conduction states, such that in response to a cell control signal (CT1, CT2, ..., CTn) provided by said control means, one of the two switches in a given cell is successively in a first conduction state and then in a second conduction state during a cyclically repeated period, and such that in response to cell control signals that are identical but offset in time by a fraction of said period the switches of successive cells operate respectively in the same manner but offset in time by said fraction of a period, the successive capacitors (C1, C2, ..., Cn) having respective increasing nominal mean charge voltages, the mean nominal charge voltage of the capacitor in each of said cells being equal to the product of a voltage (VE) from said voltage source (SE) multiplied by the reciprocal of the number of cells and by the rank of the cell, the converter being characterized in it further comprises, in parallel with said current source (C), a filter circuit (CF) for preferentially dissipating, at least in part, the energy of any component having a frequency lying in a frequency band going from the fundamental frequency of the voltage applied to the current source to a frequency equal to n times said converter frequency, also referred to as the chopper frequency, where n is the number of stages in the converter, said two frequencies not being included in said frequency band.

2. A multilevel converter according to claim 1, characterized in that said filter circuit (CF) comprises at least one RLC type series circuit comprising a resistor (Ra) and a series resonant circuit (La, Ca).

3. A multilevel converter according to claim 2, characterized in that said filter circuit (CF) comprises a common resistor (Rax) in series with a plurality of series resonant circuits (La1, Ca1; La2, Ca2).

4. A multilevel converter according to claim 2 or 3, characterized in that said filter circuit (CF) comprises a series resonant circuit for said converter frequency (Fd) and for at least some of its harmonics present at relatively higher amplitudes.

5. A multilevel converter according to claim 2 or 3, characterized in that for any RLC series circuit under consideration, the resistance of the resistor is low enough to dissipate as quickly as possible energy supplied by the converter at a frequency corresponding to the frequency of resonance of any resonant circuit connected in series with the resistor, while simultaneously being high enough to avoid excessive current damaging the switches of the converter.
